# EUROPÄISCHE PATENTSCHRIFT

(11) **EP 0 495 231 B1**
(45) Veröffentlichungstag und Bekanntmachung des Hinweises auf die Patenterteilung: **17.04.1996**
(21) Anmeldenummer: 91121962.4
(22) Anmeldetag: 20.12.1991
(51) Int. Cl.: C08L 27/06

(54) **Schäumbare Polyvinylhalogenidharzmasse mit verbessertem Verarbeitungsverhalten**
Foamable polyvinylhalide resin compositions with improved processability
Composition de résine de polyhalogénure de vinyle ayant une faculté de mise en oeuvre améliorée

(30) Priorität: 15.01.1991 DE 4100977
(43) Veröffentlichungstag der Anmeldung: 22.07.1992
(73) Patentinhaber: BASF Aktiengesellschaft, D-67063 Ludwigshafen (DE)
(72) Erfinder: Goertz, Hans-Helmut, Dr., W-6713 Freinsheim (DE); Oschmann, Werner, Dr., W-6700 Ludwigshafen (DE); Toepfer, Hubert, W-6701 Maxdorf (DE)

(56) Entgegenhaltungen:
- EP-A- 0 392 465
- BE-A- 827 578
- DATABASE WPI Section Ch, Week 7609, Derwent Publications Ltd., London, GB; Class A, AN 76-15899X

## Beschreibung

Die Erfindung betrifft schäumbare Polyvinylhalogenidharzmassen, enthaltend
A) 0,1 bis 20 Gew.-%, bezogen auf die Menge des Polyvinylhalogenids, eines zweistufigen Emulsionspolymerisats aus
   20 bis 80 Gew.-% einer 1. Stufe aus
   75 bis 100 Gew.-% Methylmethacrylat,
   0 bis 25 Gew.-% eines C₁-C₁₈-Alkylacrylats und
   0 bis 10 Gew.-% weiterer Comonomere
   und
   20 bis 80 Gew.-% einer 2. Stufe aus
   50 bis 95 Gew.-% Methylmethacrylat,
   5 bis 50 Gew.-% eines C₁-C₁₈-Alkylacrylats und
   0 bis 20 Gew.-% weiterer Comonomere,
   wobei der Gewichtsanteil des C₁-C₁₈-Alkylacrylats in der 2. Stufe mindestens 5 Gewichtsprozent größer ist als der in der 1. Stufe, und
B) 0,5 bis 10 Gew.-%, bezogen auf die Menge des Polyvinylhalogenids, eines Treibmittels.

Weiterhin betrifft die Erfindung die Verwendung des zweistufigen Emulsionspolymerisats als Verarbeitungshilfsmittel in schäumbaren Polyvinylhalogenidharzmassen.

Bei der Verarbeitung von schäumbaren Polyvinylchloridharzmassen zu geschäumten Formteilen ist eine geringe Schaumdichte besonders wünschenswert.

Aus der DE-A-2 213 214 sind Pfropfpolymerisate aus 50 bis 99 Gew.-% einer Pfropfgrundlage aus überwiegend Methylmethacrylat und 1 bis 50 Gew.-% einer Pfropfhülle aus überwiegend Acrylsäureestern bekannt, welche sich als Verarbeitungshilfsmittel für PVC eignen.

In der DE-A-2 363 564 sind Pfropfpolymerisate aus 1 bis 49 Gew.-% einer Pfropfgrundlage aus vorwiegend Methylmethacrylat und 51 bis 99 Gew.-% einer Pfropfhülle, welche neben Methylmethacrylat 10 bis 45 Gew.-% eines Acrylsäureesters enthält, beschrieben.

Diese Verarbeitungshilfsmittel wurden nicht in schäumbaren Polyvinylchloridharzmassen eingesetzt.

Aus der EP-A-103 733 ist der Einsatz von Copolymeren des Methylmethacrylats mit Acrylsäureestern als Verarbeitungshilfsmittel in schäumbaren Formmassen auf Basis von chloriertem PVC bekannt.

Die EP-A 0 392 465 beschreibt Polyvinylchlorid-haltige Harzzusammensetzungen, enthaltend ein zweistufig aufgebautes Emulsionspolymerisat, welches hergestellt wird durch Emulsionspolymerisation von 60 bis 95 Gewichtsteilen eines Monomer-Gemisches (A) aus 50 bis 95 Gewichts-% Methylmethacrylat, 5 bis 50 Gewichts-% eines Akylmethacrylats mit einer C₂- bis C₈-Alkylgruppe und 0 bis 20 Gewichts-% eines damit copolymerisierbaren Vinylmonomers, wobei ein Polymerlatex entsteht, und anschließende Polymerisierung von 40 bis 5 Gewichtsteilen eines Monomer-Gemisches (B) aus 20 bis 80 Gewichts % mindestens eines Monomers aus der Gruppe von Alkylacrylat und Alkylmethacrylat außer Methylmethacrylat, 80 bis 20 Gewichts-% Methylmethacrylat und 0 bis 20 Gewichts-% eines damit copolymerisierbaren Vinylmonomers in Gegenwart des genannten Polymerlatex, wobei die Gesamtmenge des Monomer-Gemisches (A) und des Monomer-Gemisches (B) 100 Gewichts-% beträgt, das genannte Polymer (2) eine Partikelgröße von nicht mehr ais 10⁻⁷ m (1000 Å) im Latex hat und die spezifische Viskosität bei 30 °C einer Losung, in der 0.4 g des genannten Polymers (2) in 100 ml Benzol gelöst sind, 1 oder mehr beträgt.

Die BE-A 827 578 beschreibt zweistufige Emulsicnspolymerisate aus beispielsweise Methylmethacrylat, Ethylacrylat und Butylmethacrylat, wobei in der zweiten Stufe (Hülle) weniger als 5 Gew.-% Alkylacrylat verwendet wird als in der ersten Stufe (Kern). Die erreichten Schaumdichten, insbesondere für Hart-PVC, sind jedoch unbefriedigend.

Die US 4,052,482 beschreibt PVC-Zusammensetzungen, enthaltend ein zweistufiges Emulsionspolymerisat, welches erhältlich ist durch Polymerisation eines Monomerengemisches aus 55 bis 90 Gew.-% eines Methylmethacrylates, 10 bis 45 Gew.-% eines Alkylacrylates und 0 bis 20 Gew.-% wenigstens eines Comonomeren in Gegenwart eines Polymeren, erhältlich durch Polymerisation eines Monomerengemisches aus 90 bis 100 Gew.-% Methylmethacrylat und 0 bis 10 Gew.-% wenigstens eines Comonomeren. Eine Lehre zur Senkung der Dichte in schäumbaren PVC-Harzmassen findet sich in der US 4,052,482 nicht.

Aufgabe der vorliegenden Erfindung war es, Verarbeitungshilfmittel für schäumbare PVC-Harzmassen zu Verfügung zu stellen, durch die die Schaumdichte in den Formteilen verringert wird.

Demgemäß wurde die eingangs definierten Polyvinylhalogenidharzmassen gefunden.

Vorzugsweise enthalten die schäumbaren Polyvinylhalogenidharzmassen 1 bis 15 Gew.-%, insbesondere 4 bis 12 Gew.-%, bezogen auf die Menge des Polyvinylhalogenids, des zweistufigen Emulsionspolymerisats.

Der Gewichtsanteil des C₁-C₁₈-Alkylacrylats in der 2. Stufe ist um mindestens 5, besonders bevorzugt mindestens 10 Gewichtsprozent größer als der in der 1. Stufe.

Das Emulsionspolymerisat besteht bevorzugt aus
40 bis 80 Gew.-% insbesondere 50 bis 80 Gew.-% der 1. Stufe
20 bis 60 Gew.-% insbesondere 20 bis 50 Gew.-% der 2. Stufe.

Die 1. Stufe besteht bevorzugt aus
80 bis 99,5 Gew.-% insbesondere 90 bis 99,5 Gew.-% Methylmethacrylat und
0,5 bis 20 Gew.-% insbesondere 0,5 bis 10 Gew.-% eines C₁-C₁₈-Alkylacrylats und
0 bis 10 Gew.-% weiterer Comonomere,
die 2. Stufe besteht bevorzugt aus
70 bis 94,5 Gew.-% insbesondere 70 bis 89,5 Gew.-% Methylmethacrylat und
5,5 bis 30 Gew.-% insbesondere 10,5 bis 30 Gew.-% eines C₁-C₁₈-Alkylacrylats,
0 bis 20 Gew.-% weiterer Comonomere.

Bei den C₁-C₁₈-Alkylacrylaten handelt es sich bevorzugt um Methylacrylat, Ethylacrylat, n-Propylacrylat, n-Butylacrylat oder 2-Ethylhexylacrylat.

In der 1. Stufe sind C₁ bis C₆, insbesondere C₁ bis C₄ Alkylacrylate bevorzugt. In der 2. Stufe sind C₄ bis C₁₈, insbesondere C₄ bis C₈ Alkylacrylate bevorzugt.

Als weitere Comonomere kommen bevorzugt Styrol, α-Methylstyrol, Acrylnitril, Methacrylnitril, Vinylester, wie Vinylacetat und Vinylpropionat sowie C₂-C₁₀-Alkylmethacrylate in Betracht. Der Einsatz weiterer Comonomere ist jedoch nicht notwendig, um geringe Schaumdichten zu erreichen, kann aber in einigen Fällen von Vorteil sein.

Die Herstellung des zweistufigen Polymerisats erfolgt durch Emulsionspolymerisation in an sich bekannter Weise.

Als Emulgatoren können z.B. Alkalisalze von längerkettigen Fettsäuren, Alkylsulfate, Alkylsulfonate, alkylierte Arylsulfonate oder alkylierte Biphenylethersulfonate, Salze der Abietinsäure oder deren Derivate sowie Sulfobernsteinsäureester verwendet werden.

Geeignete Initiatoren sind z.B. Natrium-, Kalium- und Ammoniumpersulfat, tert.-Butylhydroperoxid, wasserlösliche Azoverbindungen sowie die Salze der 4,4'-Azobis[4-cyanopentansäure] oder 2,2'-Azobis[2-amidinopropanhydrochlorid]. Für die Polymerisation bei relativ niedriger Temperatur eignen sich insbesondere Redoxsysteme aus einem Persulfat oder einem Hydroperoxid sowie einem Reduktionsmittel in Verbindung mit einem Eisen(II)-Salz. Geeignete Reduktionsmittel sind beispielsweise Natrium-metabisulfit, Natriumhydroxymethansulfinat und Ascorbinsäure.

Die Emulsionspolymerisation wird vorzugsweise bei Temperaturen zwischen 30 und 95°C durchgeführt.

Durch die Polymerisationstemperatur wird im wesentlichen das Molekulargewicht des gebildeten Polymeren beeinflußt, d.h. je höher die Temperatur, desto niedriger das Molekulargewicht. Die Polymerisationstemperatur kann bei beiden Stufen des Polymerisates gleich oder unterschiedlich sein. Zur Charakterisierung der Molekülgröße dient in der Regel eine Viskositätsmessung. Eine gebräuchliche Größe ist der K-Wert nach Fikentscher. Bei 0,1 g des Pfropfcopolymerisats in 100 ml Tetrahydrofuran sollte der K-Wert bevorzugt größer 150 sein.

Zunächst werden die Monomeren der 1. Stufe polymerisiert. Die Monomeren der 1. Stufe werden bevorzugt zu mehr als 95 Gew.-%, insbesondere zu mehr als 99 Gew.-% auspolymerisiert, bevor mit der Zugabe der Monomeren der 2. Stufe begonnen wird.

Die Teilchengröße der Emulsionspolymerisate kann durch die Wahl der Polymerisationsbedingungen eingestellt werden, wie es z.B. in der DE-C 2 130 989 beschrieben ist. Die Teilchengröße hängt z.B. von der Rührergeschwindigkeit ab. Bevorzugt sind mittlere Teilchendurchmesser d₅₀ (Volumenmittel) zwischen ca. 50 und 300 nm.

Der Feststoffgehalt der Emulsionen beträgt bevorzugt 30 bis 60 Gew.-%. Das Polymerisat kann aus der Emulsion durch Fällung und anschließende Trocknung oder in einem Verfahrensschritt durch Sprühtrocknung als weitgehend wasserfreies Pulver isoliert werden.

Die Sprühtrocknung kann in bekannter Weise durchgeführt werden, wie es z.B. im "Spray drying handbook" (K. Mosters, New York 1985) beschrieben ist. Die Eintrittstemperatur des Trockengases in den Sprühturm liegt zweckmäßigerweise zwischen 100 und 200°C und die Temperatur des getrockneten Pulvers am Ausgang des Sprühturms beträgt bevorzugt 40 bis 100°C.

Man erhält rieselfähige Pulver, deren mittlerer Teilchendurchmesser im allgemeinen 50 bis 500 µm, insbesondere 100 bis 300 µm beträgt.

Besonders gut verarbeitbare Pulver mit guter Rieselfähigkeit und geringen Verbackungseigenschaften erhält man, wenn die Erweichungstemperatur (Vicat B, bestimmt nach DIN 53460) oberhalb von 80°C liegt. Zweckmäßigerweise sollte daher der Gesamtgehalt an C₁-C₁₈ Alkylacrylat im zweistufigen Emulsionspolymerisat 15 Gew.-% nicht übersteigen. Bei einem höheren Anteil des C₁-C₁₈ Alkylacrylats wird die Erweichungstemperatur in unerwünschtem Ausmaß erniedrigt.

Beim Polyvinylhalogenid in der erfindungsgemäßen Polyvinylhalogenidharzmasse kann es sich insbesondere um Homopolymere des Vinylchlorids, um Copolymere des Vinylchlorids mit mindestens 80 Gew.-% Vinylchlorid handeln. Bevorzugt handelt es sich um Polyvinylchlorid.

Die erfindungsgemäßen Polyvinylhalogenidharzmassen enthalten 0,5-10, vorzugsweise 1-8 Gew.-% eines Treibmittels, bezogen auf die Menge des Poly vinylhalogenids. In Betracht kommen neben physikalischen Treibmitteln insbesondere chemische Treibmittel, z.B. Mischungen aus Citronensäure und Natriumhydrogencarbonat oder Azodicarbonamid.

Die erfindungsgemäßen Polyvinylhalogenidharzmassen können neben dem Emulsionspolymerisat, dem Treibmittel und dem Polyvinylhalogenid weitere Zusatzstoffe, z.B. Modifizierungsmittel zur Verbesserung der Schlagzähigkeit, Wärmeformbeständigkeit und Witterungsbeständigkeit, sowie Stabilisatoren, Gleitmittel, Füllstoffe, Farbstoffe und Pigmente enthalten. Im allgemeinen liegt die Gesamtmenge der weiteren Zusatzstoffe unter 40, insbesondere unter 30 Gew.-%, bezogen auf die Menge des Polyvinylhalogenids.

Die Herstellung der erfindungsgemäßen schäumbaren Polyvinylhalogenidharzmassen kann durch Abmischen der pulverförmigen zweistufigen Emulsionspolymerisate und des Treibmittels mit einem Polyvinylhalogenid und gegebenenfalls weiteren Zusatzstoffen nach üblichen Methoden, z.B. in einem Extruder, Kneter oder einer Walze erfolgen.

Die geschäumten Formteile können nach bekannten Verfahren z.B. durch Extrusionsverschäumung hergestellt werden.

Die erfindungsgemäßen schäumbaren Polyvinylhalogenidharzmassen können zur Herstellung von Formteilen mit einer besonders geringen Schaumdichte verwendet werden.
- Beispiel: 750 g Wasser

Herstellung des zweistufigen Emulsionspolymerisats
- Vorlage:: 0,020 g Eisen(II)-sulfat Heptahydrat
3,8 g Tetranatriumpyrophosphat
1,5 g dodecyliertes Natriumbiphenylsulfonat
0,4 g Natriumpersulfat
- Zulauf 1:: 800 g Wasser
18 g dodecyliertes Natriumbiphenylsulfonat
888 g Methylmethacrylat
72 g Methylacrylat
- Zulauf 2:: 300 g Wasser
1,9 g Natriummetabisulfit
- Zulauf 3:: 17,5 g Wasser
0,4 g Natriumpersulfat
- Zulauf 4:: 768 g Methylmethacrylat
192 g Butylacrylat.

Zur Vorlage wurden unter Rühren 126 g der Zulaufmischung 1 gegeben und das Gemisch wurde auf 60°C erwärmt. Bei dieser Temperatur wurden der Rest von Zulaufmischung 1 und 40 % von Zulauf 2 in 1,5 h gleichmäßig zudosiert und noch 1 h bei 60°C gerührt. Anschließend wurde Zulauf 3 auf einmal zugegeben und dann Zulauf 4 in 1,5 h zudosiert. Beginnend mit Zulauf 4 wurden die restlichen 60 % von Zulauf 2 innerhalb von 2,5 h zudosiert. Nach der Zugabe von weiteren 0,3 g Emulgator in 2,5 g Wasser erhielt man eine Emulsion mit einem Feststoffgehalt von 49,5 Gew.-% und einen pH-Wert von 6,7.

Aus der Dispersion wurde das Festprodukt durch Gefrierfällung gewonnen. Der K-Wert des Produktes nach Fikentscher, gemessen bei einer Konzentration von 0,1 g in 100 ml Tetrahydrofuran, betrug 176.

### Herstellung der Formmasse

In einem Heißmischer wurden bei 120°C folgende Komponenten gemischt: 100 Teile eines S-PVC vom K-Wert 61, 2 Teile Kreide, 4 Teile Titandioxid, 2,5 Teile Butyl-Zinnmercaptid, 0,5 Teile Calciumstearat, 0,3 Teile Polyethylenwachs, 0,2 Teile oxidiertes Polyethylenwachs, 1 Teil Distearylphthalat und 8 Teile des Propfcopolymerisats. Bei Einsetzen der Kühlung wurden als Blähmittel 2 Teile einer handelsüblichen Mischung aus Citronensäure und Natriumhydrogencarbonat zugefügt.

Die eigentliche Schaumextrusion wurde auf einem Göttfert Einschneckenmeßextruder mit folgender Ausstattung durchgeführt: Schneckendurchmesser 30 mm, Steigungsverhältnis der Schnecke 1:3, Lochscheibe 2 mm, Rundstrang-Düsenkopf 5 mm. Die Drehzahl betrug 30/min, die Temperatur der fünf Heizzonen 140 / 160 / 170 / 170 / 150°C.

### Beurteilung des PVC-Schaums

Die Schaumdichte wurde nach dem Auftriebsverfahren bestimmt. Außerdem wurde der Durchmesser des extrudierten Schaumstabes gemessen.

Die Schaumdichte betrug 0,46 g/cm³. Der Stabdurchmesser betrug 10,4 bis 10,8 mm.

## Patentansprüche (Patentansprüche für folgende(n) Vertragsstaat(en): BE, DE, FR, GB, IT, NL)

1. Schäumbare Polyvinylhalogenidharzmassen, enthaltend
A) 0,1 bis 20 Gew.-%, bezogen auf die Menge des Polyvinylhalogenids, eines zweistufigen Emulsionspolymerisats aus
20 bis 80 Gew.-% einer 1. Stufe aus
75 bis 100 Gew.-% Methylmethacrylat,
0 bis 25 Gew.-% eines C₁-C₁₈-Alkylacrylats und
0 bis 10 Gew.-% weiterer Comonomere
und
20 bis 80 Gew.-% einer 2. Stufe aus
50 bis 95 Gew.-% Methylmethacrylat,
5 bis 50 Gew.-% eines C₁-C₁₈-Alkylacrylats und
0 bis 20 Gew.-% weiterer Comonomere,
wobei der Gewichtsanteil des C₁-C₁₈-Alkylacrylats in der 2. Stufe mindestens 5 Gewichtsprozent größer ist als der in der 1. Stufe, und
B) 0,5 bis 10 Gew.-%, bezogen auf die Menge des Polyvinylhalogenids, eines Treibmittels.

2. Verwendung des Emulsionspolymerisats gemäß Anspruch 1 als Verarbeitungshilfsmittel in schäumbaren Polyvinylhalogenidharzmassen.

3. Formteile aus geschäumten Polyvinylhalogenidharzmassen gemäß Anspruch 1.

## Patentansprüche (Patentansprüche für folgende(n) Vertragsstaat(en): ES)

1. Verfahren zur Herstellung schäumbarer Polyvinylhalogenidharzmassen, dadurch gekennzeichnet, daß man
A) 0,1 bis 20 Gew.-%, bezogen auf die Menge eines Polyvinylhalogenids, eines zweistufigen Emulsionspolymerisats aus
20 bis 80 Gew.-% einer 1. Stufe aus
75 bis 100 Gew.-% Methylmethacrylat,
0 bis 25 Gew.-% eines C₁-C₁₈-Alkylacrylats und
0 bis 10 Gew.-% weiterer Comonomere
und
20 bis 80 Gew.-% einer 2. Stufe aus
50 bis 95 Gew.-% Methylmethacrylat,
5 bis 50 Gew.-% eines C₁-C₁₈-Alkylacrylats und
0 bis 20 Gew.-% weiterer Comonomere,
wobei der Gewichtsanteil des C₁-C₁₈-Alkylacrylats in der 2. Stufe mindestens 5 Gewichtsprozent größer ist als der in der 1. Stufe, und
B) 0,5 bis 10 Gew.-%, bezogen auf die Menge des Polyvinylhalogenids, eines Treibmittels, mit 70 bis 99,4 Gew.-% eines Polyvinylhalogenids abmischt.

2. Verwendung des Emulsionspolymerisats A) als Verarbeitungshilfsmittel in schäumbaren Polyvinylhalogenidharzmassen

## Claims (Claims for the following Contracting State(s): BE, DE, FR, GB, IT, NL)

1. A foamable polyvinyl halide resin composition containing
A) from 0.1 to 20% by weight, based on the amount of the polyvinyl halide, of a two-stage emulsion polymer comprising
from 20 to 80% by weight of a 1st stage comprising
from 75 to 100% by weight of methyl methacrylate,
from 0 to 25% by weight of a C₁-C₁₈-alkyl acrylate and
from 0 to 10% by weight of further comonomers
and
from 20 to 80% by weight of a 2nd stage comprising
from 50 to 95% by weight of methyl methacrylate
from 5 to 50% by weight of a C₁-C₁₈-alkyl acrylate and
from 0 to 20% by weight of further comonomers,
where the proportion by weight of the C₁-C₁₈-alkyl acrylate in the 2nd stage is at least 5 per cent by weight greater than that in the 1st stage, and
B) from 0.5 to 10% by weight, based on the amount of the polyvinyl halide, of a blowing agent.

2. Use of the emulsion polymer as set forth in claim 1 as processing aid in foamable polyvinyl halide resin compositions.

3. A moulding comprising a foamed polyvinyl halide resin composition as claimed in claim 1.

## Claims (Claims for the following Contracting State(s): ES)

1. A process for preparing foamable polyvinyl halide resin compositions, which comprises mixing
A) from 0.1 to 20% by weight, based on the amount of a polyvinyl halide, of a two-stage emulsion polymer comprising from 20 to 80% by weight of a 1st stage comprising
from 75 to 100% by weight of methyl methacrylate,
from 0 to 25% by weight of a C₁-C₁₈-alkyl acrylate and
from 0 to 10% by weight of further comonomers
and
from 20 to 80% by weight of a 2nd stage comprising
from 50 to 95% by weight of methyl methacrylate,
from 5 to 50% by weight of a C₁-C₁₈-alkyl acrylate and
from 0 to 20% by weight of further comonomers,
where the proportion by weight of the C₁-C₁₈-alkyl acrylate in the 2nd stage is at least 5 per cent by weight greater than that in the 1st stage, and
B) from 0.5 to 10% by weight, based on the amount of the polyvinyl halide, of a blowing agent,
with from 70 to 99.4% by weight of a polyvinyl halide.

2. Use of the emulsion polymer A) as processing aid in foamable polyvinyl halide resin compositions.

## Revendications (Revendications pour l'(les) Etat(s) contractant(s) suivant(s): BE, DE, FR, GB, IT, NL)

1. Masses de résine de polyhalogénure de vinyle pouvant donner un produit mousse, contenant
A) 0,1 à 20% en poids, par rapport à la quantité du polyhalogénure de vinyle, d'un produit de polymérisation en émulsion en deux étapes composé de 20 à 80% en poids d'un polymère formé en une 1ère étape à partir de
75 à 100% en poids de méthacrylate de méthyle,
0 à 25% en poids d'un acrylate d'alkyle en C₁-C₁₈ et
0 à 10% en poids d'autres comonoméres,
et de
20 à 80% en poids d'un polymère formé en une 2ème étape à partir de
50 à 95% en poids de méthacrylate de méthyle,
5 à 50% en poids d'un acrylate d'alkyle en C₁-C₁₈ et
0 à 20% en poids d'autres comonomères,
la proportion en poids de l'acrylate d'alkyle en C₁-C₁₈ dans la 2ème étape étant supérieure d'au moins 5% en poids à celle de la 1ère étape,
et
B) 0,5 à 10% en poids, par rapport à la quantité du polyhalogénure de vinyle, d'un agent moussant.

2. Utilisation du produit de polymérisation en émulsion selon la revendication 1 comme adjuvant de mise en oeuvre dans des masses de résine de polyhalogénure de vinyle pouvant donner un produit mousse.

3. Pièces moulées à partir de masses de résine de polyhalogénure de vinyle pouvant donner un produit mousse selon la revendication 1.

## Revendications (Revendications pour l'(les) Etat(s) contractant(s) suivant(s): ES)

1. Procédé de préparation de masses de résine de polyhalogénure de vinyle pouvant donner un produit mousse, caractérisé en ce que l'on mélange, à 70 à 99,4% en poids d'un polyhalogénure de vinyle,
A) 0,1 à 20% en poids, par rapport à la quantité du polyhalogénure de vinyle, d'un produit de polymérisation en émulsion en deux étapes composé de 20 à 80% en poids d'un polymère formé en une 1ère étape à partir de
75 à 100% en poids de méthacrylate de méthyle,
0 à 25% en poids d'un acrylate d'alkyle en C₁-C₁₈ et
0 à 10% en poids d'autres comonoméres,
et de
20 à 80% en poids d'un polymère formé en une 2ème étape à partir de
50 à 95% en poids de méthacrylate de méthyle,
5 à 50% en poids d'un acrylate d'alkyle en C₁-C₁₈ et
0 à 20% en poids d'autres comonomères,
la proportion en poids de l'acrylate d'alkyle en C₁-C₁₈ dans la 2ème étape étant supérieure d'au moins 5% en poids à celle de la 1ère étape,
et
B) 0,5 à 10% en poids, par rapport à la quantité du polyhalogénure de vinyle, d'un agent moussant.

2. Utilisation du produit de polymérisation en émulsion A) comme adjuvant de mise en oeuvre dans des masses de résine de polyhalogénure de vinyle pouvant donner un produit mousse.
